# EUROPÄISCHE PATENTANMELDUNG

(11) **EP 0 685 484 A2**
(43) Veröffentlichungstag der Anmeldung: **06.12.1995**
(21) Anmeldenummer: 95106241.3
(22) Anmeldetag: 26.04.1995
(51) Int. Cl.: C07F 9/38

(54) **Verfahren zur Herstellung von Vinylphosphonsäuren**

(30) Priorität: 06.05.1994 DE 4416018
(71) Anmelder: HOECHST AKTIENGESELLSCHAFT, D-65929 Frankfurt am Main (DE)
(72) Erfinder: Kleiner, Hans-Jerg, Dr., D-61476 Kronberg (DE); Roscher, Günter, Dr., D-65779 Kelkheim (DE)

(57) **Zusammenfassung**

Die vorliegende Erfindung betrifft ein Verfahren zur Herstellung von Vinylphosphonsäuren der allgemeinen Formel 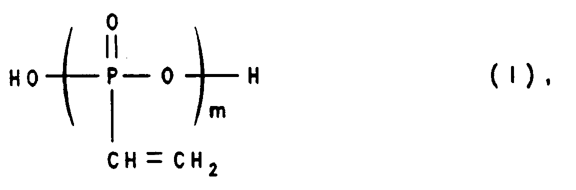
worin m für eine ganze Zahl von 1 bis 20 steht, indem man 2-Chlorethylphosphonsäuren der allgemeinen Formel 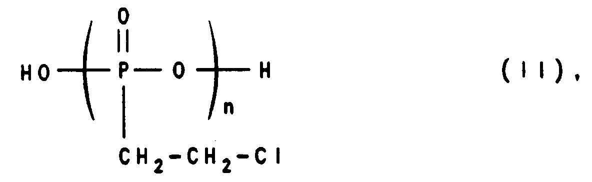
worin n eine ganze Zahl gleich oder kleiner als m darstellt, gegebenenfalls in Form einer Lösung in Anwesenheit oder Abwesenheit eines Katalysators auf eine Temperatur von 180 bis 350°C erhitzt und unter Atmosphärendruck oder reduziertem Druck Chlorwasserstoff und gegebenenfalls Wasser abspaltet und gegebenenfalls die

Vinylphosphonsäuren der Formel (I) hydrolysiert.

## Beschreibung

Die vorliegende Erfindung betrifft ein Verfahren zur Herstellung von Vinylphosphonsäuren der allgemeinen Formel (I) 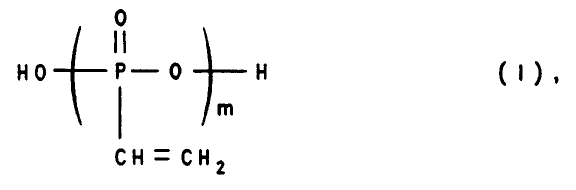
worin m für eine ganze Zahl von 1 bis 20 steht. Die Vinylphosphonsäuren lassen sich gegebenenfalls durch eine nachfolgende Hydrolyse in Vinylphosphonsäure der Formel (I), worin m gleich 1 ist, umwandeln.

Vinylphosphonsäure CH₂ = CH-PO(OH)₂ läßt sich in bekannter Weise folgendermaßen herstellen:
Man setzt Phosphortrichlorid mit Ethylenoxid um, lagert das dabei erhaltene Tris-(2-chlorethyl)-phosphit zum 2-Chorethanphosphonsäure-bis-2-chlorethylester um und erhält durch nachfolgende Umsetzung des 2-Chlorethanphosphonsäure-bis-2-chlorethylesters mit Phosgen in Gegenwart geeigneter Katalysatoren das 2-Chlorethanphosphonsäuredichlorid (DE-PS-2 132 962). Das 2-Chlorethanphosphonsäuredichlorid läßt sich anschließend durch Abspaltung von HCl in Anwesenheit geeigneter Katalysatoren (BaCl₂) und nachfolgende Hydrolyse des gebildeten Vinylphosphonsäuredichlorids in Vinylphosphonsäure umwandeln (Chem. Abstr. 54, Seite 265 (1960)).

Das vorstehend beschriebene Verfahren zur Herstellung von Vinylphosphonsäure verläuft zum einen über einen vergleichsweise langen Reaktionsweg von 5 Stufen und erfordert einen entsprechenden hohen technischen Aufwand und stellt wegen der Verwendung von Phosgen als Einsatzstoff ein beträchtliches Risiko dar. Bekanntermaßen läßt sich Phosgen nur unter Einhaltung umfangreicher, kostspieliger Sicherheitsmaßnahmen in einem technischen Prozeß handhaben.

Es bestand daher die Aufgabe, ein Verfahren zur Herstellung von Vinylphosphonsäuren zu entwickeln, das die vorstehend geschilderten Nachteile nicht aufweist und sich zudem auf einfache Weise auch in technischem Umfange realisieren läßt. Darüber hinaus sollte von einem Einsatzstoff ausgegangen werden, der vergleichsweise leicht zugänglich ist und in technischen Mengen zur Verfügung steht.

Diese Aufgabe wird überraschenderweise gelöst durch ein Verfahren zur Herstellung von Vinylphosphonsäuren der allgemeinen Formel (I), 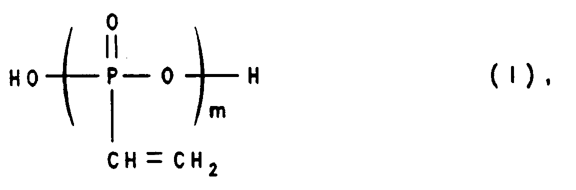
worin m für eine ganze Zahl von 1 bis 20 steht. Es ist dadurch gekennzeichnet, daß man 2-Chlorethylphosphonsäuren der allgemeinen Formel (II), 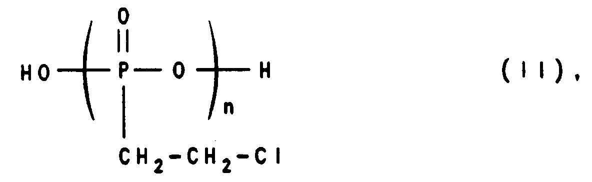
worin n eine ganze Zahl gleich oder kleiner als m darstellt, gegebenenfalls in Form einer Lösung, in Anwesenheit oder Abwesenheit eines Katalysators auf eine Temperatur von 180 bis 350°C erhitzt und unter Atmosphärendruck oder reduziertem Druck Chlorwasserstoff und gegebenenfalls Wasser abspaltet, und gegebenenfalls die Vinylphosphonsäuren der Formel (I) hydrolysiert.

Die für das erfindungsgemäße Verfahren als Einsatzstoff benötigten 2-Chlorethylphosphonsäuren der Formel (II) leiten sich von der 2-Chlorethylphosphonsäure der Formel (II), worin n gleich 1 ist, ab und lassen sich erforderlichenfalls aus ihr durch Wasserabspaltung herstellen. Die 2-Chlorethylphosphonsäure ihrerseits dient als Mittel zur Wachstumsregulierung (Wachstumshormon) von Pflanzen und wird in entsprechendem Umfange in der Landwirtschaft eingesetzt. Demzufolge wird 2-Chlorethanphosphonsäure in technischem Maßstabe hergestellt und stellt somit ein leicht zugängliches Einsatzmaterial dar.

Ein Vorteil des erfindungsgemäßen Verfahrens besteht darin, daß es nur eine Reaktionsstufe umfaßt. Ein weiterer Vorteil ist darin zu sehen, daß auf eine Verwendung von gefährlichem, hochgiftigen Phosgen verzichtet werden kann.

Die 2-Chlorethylphosphonsäuren der Formel (II) lassen sich in reiner Form, aber auch als Gemische von 2-Chlorethylphosphonsäuren unterschiedlichen Kondensationsgrades einsetzen. In diesem Zusammenhang sei darauf hingewiesen, die Kondensation von 2-Chlorethylphosphonsäuren die 2-Chlorethylphosphonsäure der Formel (II) mit n größer 1 zugänglich macht. Falls gewünscht, kann man die 2-Chlorethylphosphonsäure auch in Form einer Lösung einsetzen. Geeignete Lösungsmittel sind zum Beispiel Wasser oder niedere Alkohole wie aliphatische Alkohole mit 1 bis 5 Kohlenstoffatomen.

Im allgemeinen verwendet man - wie zuvor bereits erwähnt - 2-Chlorethylphosphonsäuren der Formel (II), worin n für eine ganze Zahl von 1 bis 20 steht. In einer Vielzahl von Fällen setzt man 2-Chlorethylphosphonsäuren der allgemeinen Formel (II), worin n für eine ganze Zahl von 1 bis 5 steht, ein. Das erfindungsgemäße Verfahren läßt sich mit gutem Erfolg ausführen, indem man als 2-Chlorethylphosphonsäure der Formel (II) die 2-Chlorethylphosphonsäure der Formel 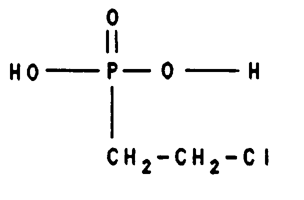
oder die 2-Chlorethylphosphonsäure in Form einer wäßrigen Lösung einsetzt. Eine derartige wäßrige 2-Chlorethylphosphonsäure enthaltende Lösung weist in der Regel 20 bis 60, insbesondere 25 bis 50, bevorzugt 30 bis 45 Gew.-% Wasser auf.

Ein weiterer Vorteil des erfindungsgemäßen Verfahrens äußert sich darin, daß man es je nach Wunsch und Bedarf sowohl in Anwesenheit eines Katalysators als auch in Abwesenheit eines Katalysators durchführen kann. Da man einerseits auf die Verwendung eines Katalysators verzichten kann und andererseits unter einer vergleichsweise großen Anzahl von Katalysatoren auswählen kann, läßt sich das erfindungsgemäße Verfahren recht vielseitig gestalten. Es dürfte insbesondere überraschend sein, daß die Umsetzung sich auch ohne Zugabe eines Katalysators mit gutem Erfolg ausführen läßt.

Als Katalysator kann man
a) solche Verbindungen, die mindestens einen 3- oder 5-bindiges Stickstoff- oder Phosphoratom enthalten, welches im Falle des Stickstoffs mit 1 bis 4 Valenzen, im Falle des Phosphors mit mindestens 3 Valenzen an organische Reste mit 1 bis 20 C-Atomen gebunden ist, wobei 2 dieser Valenzen eine Doppelbindung bilden können,
b) 1- bis 3-basische organische oder anorganische vollamidierte Säuren des 3- oder 5-wertigen Phosphors, deren N-Atome durch aliphatische Reste mit 1 bis 20 C-Atomen alkyliert und deren organische Reste 1 bis 20 C-Atome enthalten können, einsetzen.
Es lassen sich auch Mischungen der vorstehend genannten Verbindungen als Katalysator verwenden.

In einer Vielzahl von Fällen empfiehlt es sich, als Katalysator ein tertiäres Amin, ein Säureamid, ein quartäres Ammoniumsalz, ein tertiäres Phospin, eine heterocyclische Stickstoffverbindung, ein quartäres Phosphoniumsalz, ein Phosphinoxid oder ein Phosphinimid einzusetzen. Falls gewünscht, lassen sich auch Mischungen vorstehend genannter Stoffe als Katalysator verwenden.

Die im vorliegenden Fall katalytisch wirksamen obenbezeichneten Stickstoff- und Phosphorverbindungen haben die allgemeinen Formeln 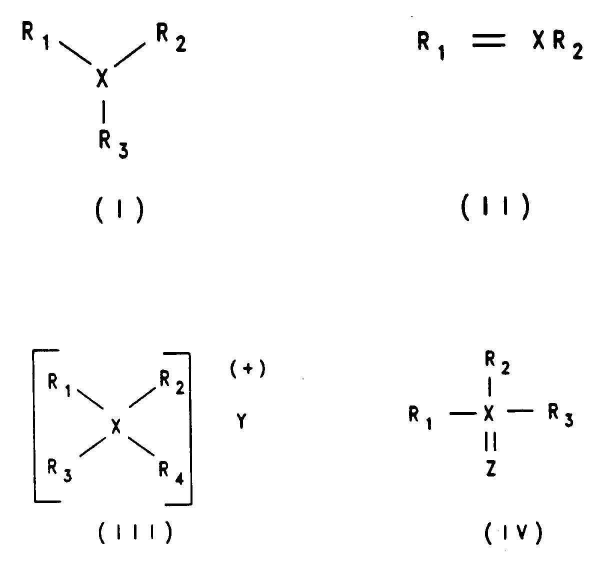
worin bedeuten:
- X: = N oder P;
- Y: = anorganischer oder organischer Säurerest;
- R₁: = organischer Rest mit 1-20 C-Atomen;
- R₂: = jeweils ein organischer Rest mit 1-20 C-Atomen; oder H, wenn X = N.
- R₃: = jeweils ein organischer Rest mit 1-20 C-Atomen; oder H, wenn X = N.

Dabei kann für X = N einer der Liganden R₁, R₂, R₃ der Rest einer gegebenenfalls mehrbasischen Carbonsäure oder der Rest einer anorganischen oder organischen Säure des 3- oder 5-wertigen Phosphors oder ihrer gegebenenfalls alkylierten Amide sein.
- R₄: = organischer Rest mit 1 bis 20 C-Atomen; oder H, wenn X = N und R₂ und R₃ jeweils = organischer Rest

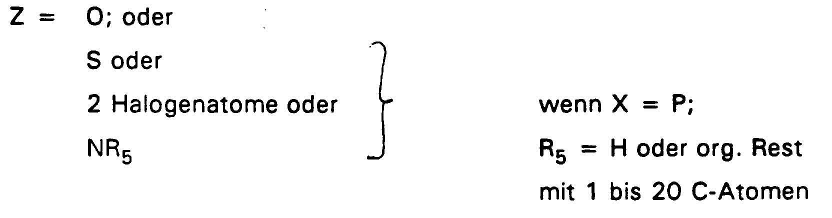

Für X kann demnach ein N- oder P-Atom stehen, für Y ein anorganischer oder organischer Säurerest, z.B. ein Halogenion, SO₄-Ion, ein Methylsulfat-Ion oder das Ion einer organischen Sulfonsäure.
R₁, R₂, R₃ und R₄ können gleiche oder verschiedene organische Reste bedeuten, z.B. geradkettige oder verzweigte Alkylgruppen mit 1 bis 20, vorzugsweise 1 bis 12, insbesondere 1 bis 4 C-Atomen, Alkenylgruppen mit 2 bis 20, vorzugsweise 2 bis 12, insbesondere 2 bis 4 C-Atomen, Cycloalkyl- oder -alkenylgruppen mit 4 bis 8, vorzugsweise 4 bis 6 C-Atomen, Aryl- oder Aralkylgruppen mit 6 bis 20, vorzugsweise 6 bis 12 C-Atomen oder Acylgruppen mit 1 bis 4, vorzugsweise 1 oder 2 C-Atomen, wobei alle Reste R ihrerseits wieder, vorzugsweise durch Halogen, insbesondere Chlor und/oder Brom oder Alkoxyreste mit 1 bis 4 C-Atomen, vorzugsweise 1 bis 2 C-Atomen, oder eine Dialkylaminogruppe mit Alkylgruppen mit 1 bis 4 C-Atomen substituiert, vorzugsweise einfach substituiert sein können.

Dabei können zwei der Reste R₁ bis R₄ Glieder eines heterocyclischen Ringes aromatischer oder cycloaliphatischer Natur sein, der weitere Hetereoatome, z.B. Stickstoff, Sauerstoff oder Schwefel enthalten kann.

Im Falle X = Stickstoff können ferner R₂ und/oder R₃ und, wenn R₂ und R₃ organische Reste sind, auch R₄ Wasserstoff bedeuten.

Z kann für Sauerstoff oder, falls X Phosphor ist, auch für Schwefel, zwei Halogenatome, vorzugsweise 2 Chloratome oder für die Gruppe NR₅ stehen, wobei R₅ = H oder ein organischer Rest mit 1 bis 20 C-Atomen sein kann.

Falls X Stickstoff ist, kann einer der Reste R₁ bis R₃ ein Säureamidrest bzw. Säurediamidrest einer organischen Säure des drei- oder fünfwertigen Phosphors sein, dessen N-Atome mit Alkylgruppen mit 1 bis 18 C-Atomen, vorzugsweise 1 bis 4 C-Atomen, substituiert sein können. Bevorzugt sind Verbindungen, in denen die Amidgruppe(n) in der beschriebenen Weise mono-, insbesondere disubstituiert sind. Die katalytisch wirksamen Verbindungen können auch mehrere gleiche oder verschiedene Elemente der Bedeutung X enthalten.

Das Molekulargewicht des verwendeten Katalysators beträgt vorzugsweise bis zu 500, insbesondere bis zu 200.

Als Katalysatoren verwendbar sind also zum Beispiel:
A. Amine wie Trimethylamin, Triethylamin, Tripropylamin, Tributylamin, Dimethylethylamin, Diethylbutylamin , Dimethyldodecylamin, N-Dimethylanilin, 4-Methyl-N-dimethylanilin, N-Diethylanilin, N,N'-Tetramethyl-p-phenylendiamin, Triphenylamin, Diethylamin, N-Butylamin.
B. Heterocyclische Stickstoffverbindungen, wie Pyridin, Dimethylaminopyridin, Chinolon, Isochinolon und ihre Alkyl- oder Dialkyl-, vorzugsweise Methyl- oder Dimethylderivate, Imidazol, N-Vinylimidazol, Benzimidazol, Benzthiazol, Benztriazol, 2-Amino-6-ethoxybenzthiazol, 2-Hydroxy-5,7-dimethylpyrazolo(1,5,a)-pyrimidin, N-Methylpyrrolidin, N-Ethylpiperidin, Pyrrolidinocyclohexen, Triazol, Piperidin, sowie ihre Oxide, z.B. Pyridinoxid.
C. Säureamide, z.B. Dimethylformamid, Diethylformamid, Diethylpropionamid, N-Dimethylbenzamid, N,N'-Tetramethylterephthalsäureamid , Hexamethylphosphorsäuretriamid, Ethanphosphonsäure-bis-diethylamid, Methanbutanphosphonigsäuredimethylamid, Di-Ethylphosphonigsäuerisobutylamid oder Harnstoffe, wie Tetramethylharnstoff und N,N',N'-Trimethyl-N-phenylharnstoff.
D. Quartäre Ammoniumsalze, z.B. Tetramethylammoniumchlorid oder -bromid, Trimethylbenzylammoniumchlorid, Triethylbenzylammoniumchlorid oder -bromid, Trimethylchlormethylammoniumchlorid.
E. Tertiäre Phosphine, z.B. Trimethylphosphin, Triethylphosphin, Tripropylphosphin, Tributylphosphin, Triphenylphosphin, Methyldiethylphosphin, Dimethylpropylphosphin, Diethylbenzylphosphin, Tris-(p-dimethylaminophenyl)-phosphin.
F. Quartäre Phosphoniumsalze, z.B. Tetraethylphosphoniumchlorid, Trimethylbenzylphosphoniumchlorid, Triphenylethylphosphonium-2,4-diamino-benzolsulfonat.
G. Organische Verbindungen des 5-bindigen Phosphors, z.B. Trimethylphosphinoxid, Tributylphosphinoxid, Trihexylphosphinoxid, Triphenylphosphinoxid, Dimethylphenylphosphinoxid, Dimethylchlormethylphosphinoxid, Dimethylhexylphosphinoxid, Dimethyldodecylphosphinoxid, Dimethyleikosylphosphinoxid, Dimethylpyrrolidin-1-methylphosphinoxid, Dimethylphenylphosphinsulfid, Dimethyldodecylphosphinsulfid, 2-Dimethylphosphinylpropionsäuremethylester, 1-Methylphospholen-3,1-Ethyl-3-methylphospholen-3,2-Fluorsulfonylethyldimethylphosphinoxid, N-2-Dimethylphosphinylethyl-N-methylacetamid, N-2-Dimethylphosphinylethyl-methylamin, Triphenylphosphindichlorid, Dimethylchlormethyldichlorphosphoran, Triphenylphosphinimin, Triphenyl-n-2-hydroxyethylphosphinimin.

Die Katalysatoren werden in Mengen von 0,2 bis 5 Gew.-% oder mehr, bezogen auf den verwendeten 2-Chlorethylphosphonsäure bzw. das verwendete Polykondensat, vorzugsweise in Mengen von 0,5 - 2 Gew.-%, verwendet. Sie lassen sich als solche oder in Form ihrer Salze, vorzugsweise ihrer Hydrochloride, einsetzen.

Wie bereits eingangs angegeben, führt man das erfindungsgemäße Verfahren bei einer Temperatur von 180 bis 350°C durch und spaltet unter Atmosphärendruck oder reduziertem Druck Chlorwasserstoff und gegebenenfalls Wasser ab.

Man kann diese Umsetzung auch in einer etwas abgewandelten Variante durchführen, indem man zunächst bei niedrigeren Temperaturen und reduziertem Druck, beispielsweise bei 180 bis 250°C und 0,5 bis 10 mbar, überwiegend Wasser abspaltet und nachfolgend bei einer höheren Temperatur, beispielsweise 250 bis 280°C die Abspaltung der Hauptmenge des Chlorwasserstoffs vornimmt. Das Verfahren läßt sich sowohl unter Atmosphärendruck als auch unter reduziertem Druck durchführen. Beabsichtigt man, unter Atmosphärendruck zu arbeiten, so empfiehlt es sich, die 2-Chlorethylphosphonsäuren der Formel (II) auf 230 bis 320°C zu erhitzen und unter Atmosphärendruck Chlorwasserstoff und gegebenenfalls Wasser abzuspalten.

In den meisten Fällen genügt es, die 2-Chlorethylphosphonsäuren der Formel (II) auf 200 bis 300, insbesondere auf 220 bis 285°C zu erhitzen.

Beabsichtigt man, unter reduziertem Druck zu arbeiten, so empfiehlt es sich unter einem reduziertem Druck von 0,001 bis 500 mbar Chlorwasserstoff und gegebenenfalls Wasser abzuspalten.
In der Regel lassen sich unter einem reduziertem Druck von 0,001 bis 100 mbar, insbesondere 0,1 bis 20 mbar Chlorwasserstoff und gegebenenfalls Wasser mit gutem Erfolg abspalten.

Zur Vermeidung unerwünschter Nebenreaktionen (Bildung von Polymerisaten) kann es vorteilhaft sein, das erfindungsgemäße Verfahren in Gegenwart von Polymerisationsinhibitoren, beispielsweise Hydrochinon, Hydrochinonmonomethylether oder Phenothiazin, durchzuführen.

Das Verfahren läßt sich sowohl diskontinuierlich als auch kontinuierlich durchführen. Besonders günstig gestaltet sich eine kontinuierliche Ausführungsform des Verfahrens. Hierbei wird der Ausgangstoff, also die 2-Chlorethylphosphonsäure der allgemeinen Formel (II) gegebenenfalls bei einer vorgegebenen Temperatur in flüssiger Form gehalten oder in Form einer Lösung, insbesondere 2-Chlorethylphosphonsäure als wäßrige Lösung, in eine beheizte Reaktionszone eindosiert, die gegebenenfalls einen reduzierten Druck aufweist. In der Reaktionszone spalten sich Chlorwasserstoff und gegebenenfalls Wasser ab und werden in einer gekühlten Vorlage kondensiert. Bei geeigneter Verfahrensführung gelingt es, eine vergleichsweise hochkonzentrierte wäßrige Salzsäure zu gewinnen.

Infolge der Wasserabspaltung bilden sich im Verlauf der Umsetzung höher kondensierte Vinylphosphonsäuren der Formel (I) bzw. höherkondensierte 2-Chlorethylphosphonsäuren der allgemeinen Formel (II). Nach Beendigung der Umsetzung erhält man üblicherweise ein Gemisch verschiedener Vinylphosphonsäuren unterschiedlichen Kondensationsgrades. Falls gewünscht kann man das Gemisch unmittelbar, d.h. in der Form wie es anfällt, weiter verwenden.

Beabsichtigt man jedoch, nichtkondensierte Vinylphosphonsäure der Formel (I), worin m gleich 1 ist, herzustellen, so hydrolysiert man das Gemisch der unterschiedlichen kondensierten Vinylphosphonsäuren der allgemeinen Formel (I) unter Zugabe von Wasser.

Die nachfolgenden Beispiele belegen die Erfindung, ohne sie zu beschränken.

### Experimenteller Teil

### Beispiel 1

106 g (0,733 Mol) auf 90°C erhitzte flüssige 2-Chlorethylphosphonsäure werden in einen auf 270-275°C erhitzten Dünnschichtverdampfer bei einem Anfangsdruck von 0,5 mbar eingetropft, dabei gasen Chlorwasserstoff und Wasser ab, die in einer der Apparatur nachgeschalteten Kühlfalle kondensiert werden. Im Zuge der Reaktion steigt der Druck auf 2 bis 3 mbar. Nach insgesamt 150 Minuten werden nach erfolgter Umsetzung 69 g Vinylphosphonsäuren enthaltendes Sumpfprodukt gewonnen. In der Kühlfalle haben sich nach beendeter Umsetzung 13,1 g einer 33 %igen Salzsäure gesammelt. Aus den Vinylphosphonsäuren wird eine 50 %ige wäßrige Lösung hergestellt. Auf Grund eines ³¹P-NMR-Spektrums werden insbesondere folgende Inhaltsstoffe identifiziert: 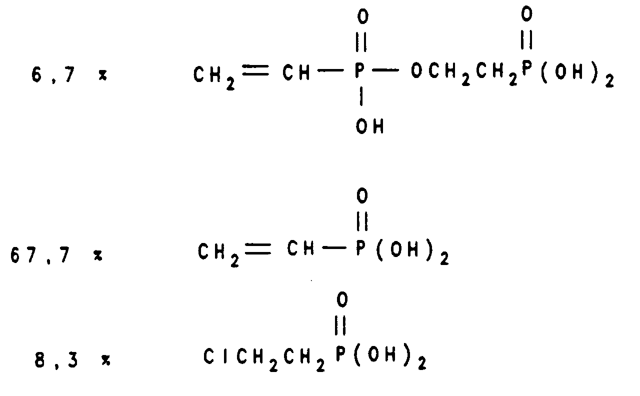
Die %-Anteile beziehen sich auf den Gesamt-Phosphorgehalt.

Wird der Versuch mit einer 80 %igen wäßrigen Lösung von 2-Chlorethylphosphonsäure wiederholt, die bei Raumtemperatur in den Dünnschichtverdampfer eindosiert wird, so erhält man im wesentlichen nahezu dasselbe Ergebnis. In der Kühlfalle sammelt sich dann 36,5 g einer 33,5 %igen Salzsäure.

### Beispiel 2

122 g (0,844 Mol) 2-Chlorethylphosphonsäure, vermischt mit 0,6 g Dimethylaminopyridin, werden auf 90°C erhitzt und in einen auf 270-275°C erhitzten Dünnschichtverdampfer, wie in Beispiel 1 beschrieben, eingetropft. In einer nachgeschalteten Kühlfalle sammeln sich 15,4 g einer 33 %igen Salzsäure. Man erhält 80,7 g Vinylphosphonsäuren enthaltendes Sumpfprodukt. Daraus wird eine 50 %ige wäßrige Lösung hergestellt. Auf Grund eines ³¹P-NMR-Spektrums werden insbesondere folgende Inhaltstoffe identifiziert: 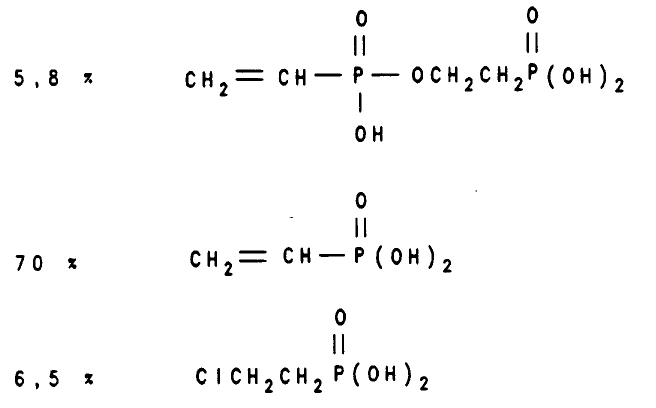
Die %-Anteile beziehen sich auf dem Gesamt-Phosphorgehalt.

### Beispiel 3

86,4 g (0,598 Mol) 2-Chlorethylphosphonsäure, vermischt mit 0,43 g Triphenylphosphin und 0,26 g Hydrochinonmonoethylether, werden auf 90°C erhitzt und in einem auf 270°C erhitzten Dünnschichtverdampfer, wie in Beispiel 1 beschrieben, während 3,5 Stunden eingetropft. In einer nachgeschalteten Kühlfalle sammeln sich 7,3 g einer 33 %igen Salzsäure. Man erhält 59,7 g Vinylphosphonsäuren enthaltendes Sumpfprodukt. Daraus wird eine 50 %ige wäßrige Lösung hergestellt. Auf Grund eines ³¹P-NMR-Spektrums werden insbesondere folgende Inhaltsstoffe identifiziert: 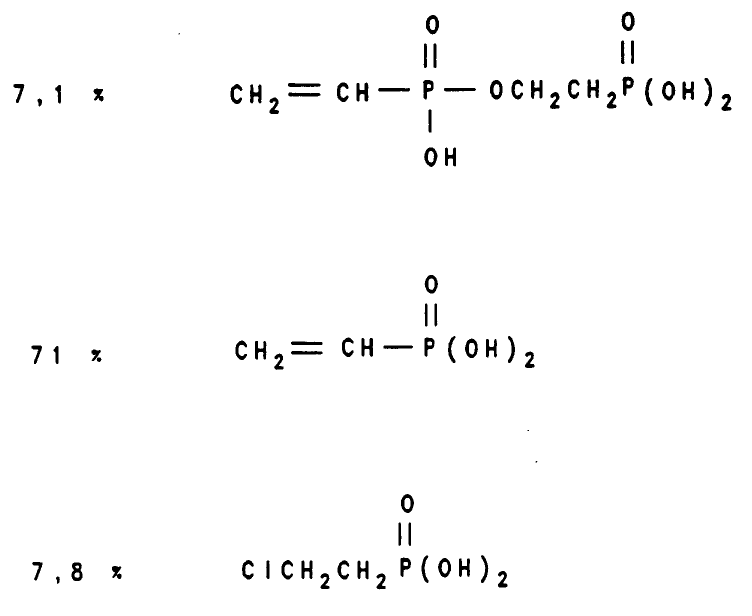
Die %-Anteile beziehen sich auf den Gesamt-Phosphorgehalt.

### Beispiel 4

57,2 g (0,21 Mol) 2-Chlorethylpyrophosphonsäure werden auf 100°C erhitzt und in einen auf 270°C erhitzten Dünnschichtverdampfer, wie in Beispiel 1 beschrieben, eingetropft. In einer nachgeschalteten Kühlfalle sammelt sich nur wenig Salzsäure. Man erhält 42,7 g Vinylphosphonsäuren enthaltendes Sumpfprodukt. Daraus wird eine 50 %ige wäßrige Lösung hergestellt. Auf Grund eines ³¹P-NMR-Spektrums werden insbesondere folgende Inhaltstoffe identifiziert: 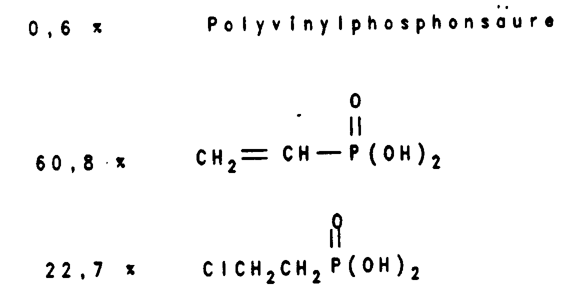
Die %-Anteile beziehen sich auf den Gesamt-Phosphorgehalt.

### Beispiel 5

In einem Rührkolben mit Destillationsbrücke, Destillationsvorlage, Kühlfalle, Vakuumanschluß werden 50 g Vinylphosphonsäure und 1000 g 50 %ige wäßrige Chlorethylphosphonsäure vorgelegt. Das Gemisch wird unter Vakuum (30 mbar) auf 220°C aufgeheizt und danach 4,5 Stunden bei 220°C gehalten. Als Rückstand verbleiben 360 g einer gelblichen Flüssigkeit, die nach Bromzahl ca. 73 % Vinylphosphonsäuren enthält. Das Destillat in der Kühlfalle (610 g) ist 19 %ige wäßrige Salzsäure.

## Patentansprüche

1. Verfahren zur Herstellung von Vinylphosphonsäuren der allgemeinen Formel 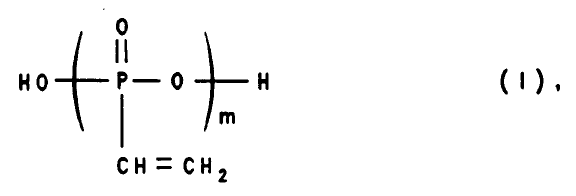 worin m für eine ganze Zahl von 1 bis 20 steht, dadurch gekennzeichnet, daß man 2-Chlorethylphosphonsäuren der allgemeinen Formel 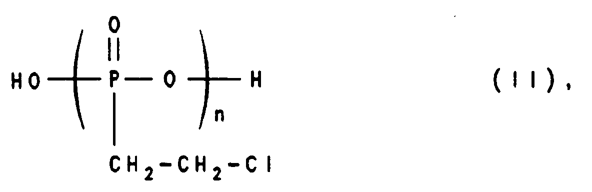 worin n eine ganze Zahl gleich oder kleiner als m darstellt, gegebenenfalls in Form einer Lösung in Anwesenheit oder Abwesenheit eines Katalysators auf eine Temperatur von 180 bis 350°C erhitzt und unter Atmosphärendruck oder reduziertem Druck Chlorwasserstoff und gegebenenfalls Wasser abspaltet und gegebenenfalls die Vinylphosphonsäuren der Formel (I) hydrolysiert.

2. Verfahren nach Anspruch 1, dadurch gekennzeichnet, daß man 2-Chlorethylphosphonsäuren der allgemeinen Formel 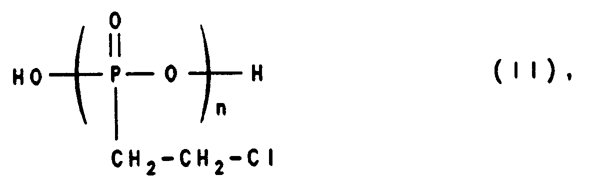 worin n für eine ganze Zahl von 1 bis 5 steht, einsetzt.

3. Verfahren nach Anspruch 1 oder 2, dadurch gekennzeichnet, daß man als 2-Chlorethylphosphonsäure der Formel (II) die 2-Chlorethylphosphonsäure der Formel 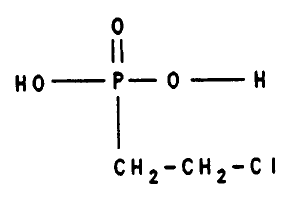 oder in Form einer wäßrigen Lösung (mit 20 bis 60 Gew.-% Wasser) einsetzt.

4. Verfahren nach einem oder mehreren der Ansprüche 1 bis 3, dadurch gekennzeichnet, daß man als Katalysator
a) solche Verbindungen, die mindestens ein 3- bis 5-bindiges Stickstoff- oder Phosphoratom enthalten, welches im Falle des Stickstoffs mit 1 bis 4 Valenzen - im Falle des Phosphors mit mindestens 3 Valenzen an organische Reste mit 1 bis 20 C- Atomen gebunden ist, wobei 2 dieser Valenzen eine Doppelbindung bilden können,
oder
b) 1- bis 3-basische organische oder anorganische vollamidierte Säuren des 3- oder 5-wertigen Phosphors, deren N-Atome durch aliphatische Reste mit 1 bis 20 C-Atomen alkyliert und deren organische Reste 1 bis 20 C-Atome enthalten können, einsetzt.

5. Verfahren nach einem oder mehreren der Ansprüche 1 bis 4, dadurch gekennzeichnet, daß man als Katalysator ein tertiäres Amin, ein Säureamid, ein quartäres Ammoniumsalz, ein tertiäres Phosphin, eine heterocyclische Stickstoffverbindung, ein quartäres Phosphoniumsalz, ein Phosphinoxid oder ein Phosphinimid einsetzt.

6. Verfahren nach einem oder mehreren der Ansprüche 1 bis 5, dadurch gekennzeichnet, daß man die 2-Chlorethylphosphonsäuren der Formel (II) auf 230 bis 320°C erhitzt und unter Atmosphärendruck Chlorwasserstoff und gegebenenfalls Wasser abspaltet.

7. Verfahren nach einem oder mehreren der Ansprüche 1 bis 5, dadurch gekennzeichnet, daß man die 2-Chlorethylphosphonsäuren der Formel (II) auf 200 bis 300°C erhitzt.

8. Verfahren nach einem oder mehreren der Ansprüche 1 bis 5, dadurch gekennzeichnet, daß man die 2-Chlorethylphosphonsäuren der Formel II auf 220 bis 285°C erhitzt.

9. Verfahren nach einem oder mehreren der Ansprüche 1 bis 5 und 7 bis 8, dadurch gekennzeichnet, daß man unter einem reduzierten Druck von 0.001 bis 500 mbar Chlorwasserstoff und gegebenenfalls Wasser abspaltet.

10. Verfahren nach einem oder mehreren der Ansprüche 1 bis 5 und 7 bis 9, dadurch gekennzeichnet, daß man unter einem reduzierten Druck von 0.001 bis 100 mbar, insbesondere 0,1 bis 20 mbar Chlorwasserstoff und gegebenenfalls Wasser abspaltet.
